# EUROPEAN PATENT APPLICATION

(11) **EP 4 826 767 A1**
(43) Date of publication of application: **21.10.2026**
(21) Application number: 26162505.7
(22) Date of filing: 05.03.2026
(51) Int. Cl.: H01M 4/04, H01M 10/04

(54) **DRY ELECTRODE, MANUFACTURING DEVICE OF DRY ELECTRODE, AND MANUFACTURING METHOD USING MANUFACTURING DEVICE**

(30) Priority: 15.04.2025 KR 20250048706
(71) Applicant: SAMSUNG SDI CO., LTD., Yongin-si, Gyeonggi-do 17084 (KR)
(72) Inventor: PYUN, Ah Ram, Suwon-si, Gyeonggi-do 16678 (KR); LEE, Jin Hyon, Suwon-si, Gyeonggi-do 16678 (KR); JEONG, Ji Soo, Suwon-si, Gyeonggi-do 16678 (KR); YOO, Chi Jong, Suwon-si, Gyeonggi-do 16678 (KR)
(74) Representative: Maiwald GmbH

(57) **Abstract**

A dry electrode manufacturing device includes machine-direction stretching rolls configured to stretch a dry electrode film in a first direction while transporting the dry electrode film in a first direction. The dry electrode manufacturing device also includes transverse-direction stretching rolls configured to stretch the dry electrode film in a second direction perpendicular to the first direction while transporting the dry electrode film in the first direction. The machine-direction stretching rolls and the transverse-direction stretching rolls are alternatively positioned in the first direction.

## Description

### BACKGROUND

### 1. Technical Field

The present disclosure relates to a dry electrode manufacturing device, a dry electrode manufacturing method, and a dry electrode manufactured thereby.

### 2. Description of the Related Art

Secondary batteries can be discharged and recharged, unlike primary batteries that cannot be recharged. Low-capacity secondary batteries are used in small portable electronic devices such as smartphones, feature phones, laptop computers, digital cameras, and camcorders. Large-capacity secondary batteries are widely used as power sources for hybrid vehicles, electric vehicles, and the like, and as power storage batteries. Such secondary batteries include electrodes including a positive electrode and/or a negative electrode, an electrode assembly including the electrodes, a case in which the electrode assembly is accommodated, an electrode terminal connected to the electrode assembly, and the like.

With developing technology, batteries with high capacity are required. Accordingly, a plurality of batteries may be electrically connected to provide more capacity. For example, the batteries may be used in an electronic device in the form of a battery module including a plurality of batteries (referred to herein as a "battery cell"), and/or a battery pack including a plurality of battery modules. In some implementations, a battery pack may be configured as a plurality of battery cells. And such a battery back may be used in an electronic device requiring high output and/or high capacity such as an electric vehicle.

Electrodes for rechargeable batteries are made from slurries that contain organic solvents. Such slurries require a large amount of solvent in an electrode manufacturing process. Thus, a dry process that does not use of such organic solvents has been investigated.

In a conventional dry electrode manufacturing method, a mixture including an active material, a conductive material, and a binder is fiberized using a kneading device and then pulverized. The pulverized dry powder is calendered into a free-standing film using calendering rolls or the like to thereby make a dry electrode film. In addition, the free-standing film, which is a dry electrode film, may be laminated onto a current collector to make a dry electrode.

During a calendaring process in the conventional fabrication of dry electrode films, stretching occurs in a machine direction (MD) that is a transport direction of the dry electrode film. As a result, improvement in tensile strength in a transverse direction (TD) of the film is insignificant. Accordingly, defects such as tearing or breakage of the dry electrode film in the machine direction frequently occur during transport or handling by an operator. The result is a decrease in processability and deterioration in product quality.

The information disclosed in this section intended to improve understanding of the background of the present disclosure. And it may include information that does not constitute related or prior art.

### SUMMARY OF THE DISCLOSURE

The present disclosure is directed to providing a dry electrode manufacturing device, a dry electrode manufacturing method, and a dry electrode manufactured with the device and method, which are capable of increasing tensile strength of a dry electrode film in a machine direction (MD), which is a transport direction of the dry electrode film, and in a transverse direction (TD).

However, technical problems to be solved by the present disclosure are not limited to the problems described above, and other problems not mentioned herein may be clearly understood by those skilled in the art from the description herein.

A dry electrode manufacturing device according to an aspect of the present disclosure includes machine-direction stretching rolls configured to stretch a dry electrode film in a first direction while transporting the dry electrode film in the first direction, and transverse-direction stretching rolls configured to stretch the dry electrode film in a second direction perpendicular to the first direction while transporting the dry electrode film in the first direction, wherein the machine-direction stretching rolls and the transverse-direction stretching rolls are alternatively positioned in the first direction.

According to an aspect of the embodiment, the transverse-direction stretching rolls may include grooves and protrusions alternately positioned in the second direction.

A contour of each of the protrusions and a contour of each of the grooves may correspond to each other.

A height of the protrusion may be equal to a depth of the groove, and a width of the protrusion may be equal to a width of the groove.

The heights of the protrusions and the depths of the grooves may be 1 µm to 20 mm, and the widths of the protrusions and the widths of the groove may be 1 mm to 200 mm.

The transverse-direction stretching rolls may include a first transverse-direction stretching roll and a second transverse-direction stretching roll that are disposed on opposite sides of the dry electrode film in a thickness direction, and the first transverse-direction stretching roll and the second transverse-direction stretching roll may be positioned such that the protrusions of one of the first transverse-direction stretching roll and the second transverse-direction stretching roll face the grooves of the other of the first transverse-direction stretching roll and the second transverse-direction stretching roll.
According to another aspect, each of the transverse-direction stretching rolls may include a patterned portion in which an oblique pattern inclined at a predetermined angle is formed with respect to a straight line extending in the second direction. For example, the predetermined angle may be less than 45°.

The patterned portion may include a pair of first patterned portions having a first oblique pattern formed at a first angle with respect to the straight line, and a pair of second patterned portions having a second oblique pattern formed at a second angle with respect to the straight line, and the first patterned portions are positioned symmetrical in the second direction with respect to a center portion of the transverse-direction stretching roll, and the second patterned portions are positioned symmetrical in the second direction with respect to the center portion of the transverse-direction stretching roll.
he second patterned portions may be positioned farther from the center portion than the first patterned portion, and the second angle may be greater than the first angle.

For example, the patterned portion may further include a third patterned portion having an oblique pattern formed at a third angle that is greater than the second angle, and the third patterned portion may be positioned farther from the center portion than the second patterned portion is positioned from the center portion.

The transverse-direction stretching rolls may include a first transverse-direction stretching roll and a second transverse-direction stretching roll disposed on opposite sides of the dry electrode film in a thickness direction, and the first transverse-direction stretching roll and the second transverse-direction stretching roll may be positioned such that the first patterned portion of the first transverse-direction stretching roll faces the first patterned portion of the second transverse-direction stretching roll, and such that the second patterned portion of the first transverse-direction stretching roll faces the second patterned portion of the second transverse-direction stretching roll.

For example, the patterned portions may have more friction than a non-patterned portions where the oblique pattern is not formed in a surfaces of the transverse-direction stretching rolls.

For example, the patterned portions may have a greater surface roughness than the non-patterned portions.

For example, the patterned portions may include raised patterns protruding further than the non-patterned portions.

According to still another aspect of the embodiment, the machine-direction stretching rolls and the transverse-direction stretching rolls are alternatively disposed in the first direction may include: one or more machine-direction stretching rolls and one or more transverse-direction stretching rolls may be alternately positioned in the first direction.

According to yet another aspect of the embodiment, the transverse-direction stretching roll may be intermittently positioned between adjacent machine-direction stretching rolls.

According to yet another aspect of the embodiment, the machine-direction stretching roll may be disposed at a most downstream end in the first direction.

A dry electrode manufacturing method according to an aspect of the present disclosure may manufacture a dry electrode using the dry electrode manufacturing device of the above-described embodiments.

A dry electrode according to an aspect of the present disclosure may be manufactured using the dry electrode manufacturing device of the above-described embodiments.

### BRIEF DESCRIPTION OF THE DRAWINGS

The drawings illustrate preferred embodiments of the present disclosure and further describe aspects and features of the present disclosure together with the detailed description of the present disclosure.
FIGS. 1 to 4 are cross-sectional views of secondary batteries according to embodiments of the present disclosure;
FIG. 5 is a schematic diagram of a dry electrode manufacturing device according to one embodiment of the present disclosure;
FIG. 6 is a schematic diagram of an example in which machine-direction stretching rolls and transverse-direction stretching rolls are mixed and disposed;
FIG. 7 is a schematic view of a first embodiment of the transverse-direction stretching roll in the dry electrode manufacturing device shown in FIG. 5;
FIG. 8 is a schematic view of a second embodiment of the transverse-direction stretching roll in the dry electrode manufacturing device shown in FIG. 5;
FIG. 9 is a schematic diagram of a dry electrode manufacturing device according to another embodiment of the present disclosure; and
FIG. 10 is a flowchart of a dry electrode manufacturing method according to an embodiment of the present disclosure.

### DETAILED DESCRIPTION OF EXEMPLARY EMBODIMENTS

Hereinafter, preferred embodiments of the present disclosure will be described in detail with reference to the accompanying drawings. Terms or words used in the present disclosure should not be interpreted limited to ordinary or dictionary meanings and should be interpreted as meanings and concepts consistent with the technical idea of this disclosure based on the principle that the inventor can properly define the concept of the term in order to describe his or her invention in the best way. Accordingly, it is to be understood that the embodiments described herein, and the configurations shown in the drawings, are only some of the most preferred embodiments of the present disclosure and do not represent all of the technical ideas of the disclosure.

Also, when used herein, the terms "comprise, include" and/or "comprising, including" specify the presence of the shapes, numbers, steps, actions, members, elements, and/or groups thereof mentioned and are not intended to exclude the presence or addition of one or more other shapes, numbers, actions, members, elements, and/or groups thereof.

Furthermore, in order to aid in understanding the disclosure, the accompanying drawings are not drawn to scale, and the dimensions of some components may be exaggerated. In addition, the same reference numbers may be assigned to the same components in different embodiments.

The reference that two objects for comparison are 'identical' means 'substantially identical.' Therefore, the term "substantially identical" may include deviations that are considered low in the art, for example, deviations of less than 5%. Also, uniformity of a parameter over a given region may imply uniformity from an average perspective.

Although the terms "first," "second," etc. are used to describe various components, these components are not limited thereby. These terms are used to distinguish one component from another component, and unless specifically stated to the contrary, it is to be understood that a first component may be a second component.

Throughout the specification, unless otherwise stated, each component may be singular or plural.

When any component is said to be disposed on the "upper surface (or lower surface)" of a component or "on (or under)" a component, this not only means that any component is disposed in contact with the upper (or lower) surface of the component, but also means that other components may be interposed between the component and any component disposed on (or under) the component.

In addition, when a component is described as being "connected," "coupled," or "linked" to another component, the components may be directly connected or linked to each other, but it should be understood that other components may be "interposed" between respective components, or that each component may be "connected," "coupled," or "linked" through other components.

As used herein, the term "and/or" includes any and all combinations of one or more of the related items listed herein. Also, the use of the term "may" when describing embodiments of the present disclosure refers to "one or more embodiments of the present disclosure." Expressions such as "one or more" and "at least one" preceding a list of elements modify the list of elements as a whole and do not modify individual elements in the list.

When reference is made to "A and/or B" throughout the specification, it means A, B, or A and B unless particularly stated to the contrary. When it comes to "C to D", it means that it is greater than or equal to C and less than or equal to D unless particularly stated to the contrary.

When a phrase such as "at least one of A, B, and C", "at least one of A, B, or C", "at least one selected from the group of A, B, and C", or "at least one selected from A, B, and C" is used to specify a list of elements A, B, and C, the phrase may refer to any suitable combination.

The term "use" may be considered synonymous with the term "utilize." As used herein, the terms "substantially," "about," and similar terms are used as terms of approximation, not as terms of degree, and are intended to take into account inherent variations in measured or calculated values that would be recognized by a person of ordinary skill in the art.

While the terms such as first, second, third, and the like may be used herein to describe various elements, components, regions, layers, and/or sections, such elements, components, regions, layers, and/or sections are not intended to be limited by such terms. The terms are used to distinguish one element, component, region, layer, or section from another element, component, area, layer, or section. Thus, a first element, component, region, layer, or section discussed below may be named a second element, component, region, layer, or section without departing from the teachings of the exemplary embodiments.

To describe the relationship of one element or feature to another element(s) or feature(s) as shown in the drawings, spatially relative terms such as "beneath," "below," "lower," "above," "upper," and the like may be used herein for ease of description. It will be understood that spatially relative positions are intended to encompass different orientations of the device in use or operation in addition to the orientations depicted in the drawings. For example, when a device in a drawing is inverted, an element described as "below" or "under" another element is understood to be "on" or "above" the other element. Thus, the term "below" can encompass both up and down directions.

The terms used herein are used to describe embodiments of the present disclosure and are not intended to limit the present disclosure.

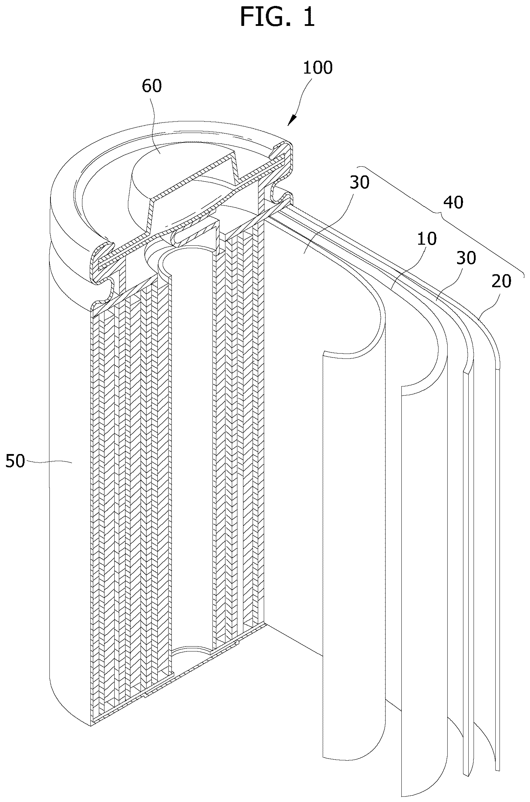

FIGS. 1 to 4 are cross-sectional views of secondary batteries according to embodiments of the present disclosure.

### Secondary battery 100

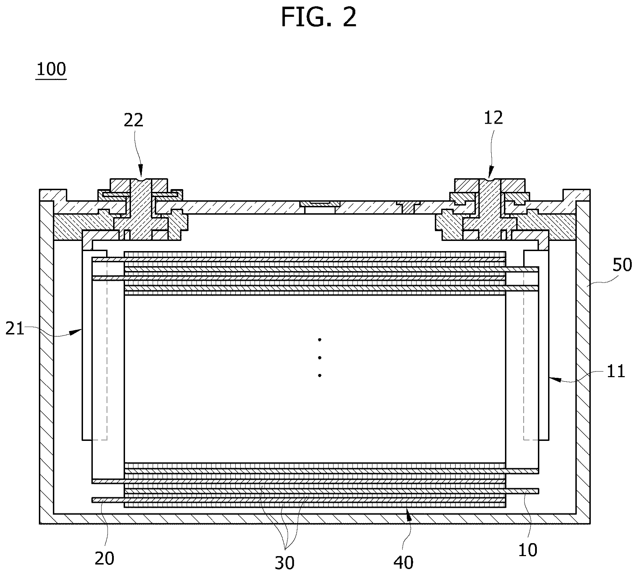

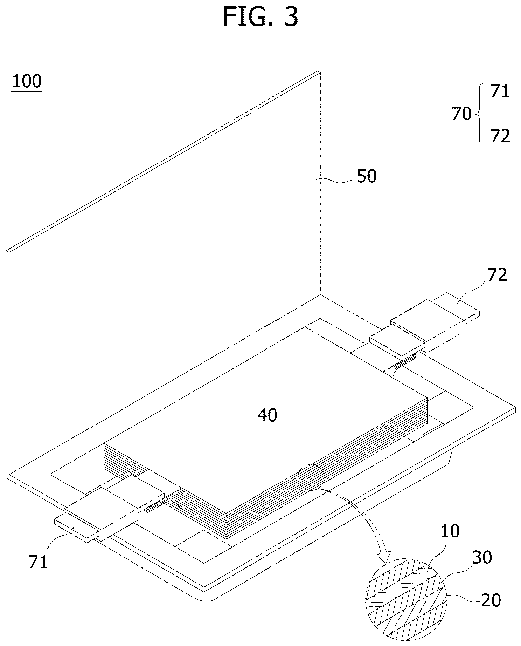

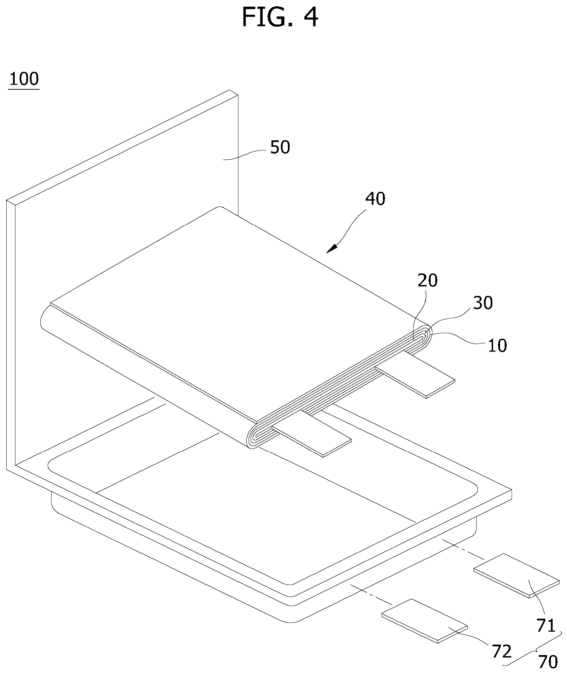

A secondary battery 100 may be cylindrical, prismatic, pouch-type, and coin-type batteries depending on its shapes. FIGS. 1 to 4 are schematic views each illustrating a secondary battery according to an embodiment. FIG. 1 illustrates a cylindrical secondary battery, FIG. 2 illustrates a prismatic secondary battery, and FIGS. 3 and 4 illustrate a pouch-type secondary battery. Referring to FIGS. 1 to 4, the secondary battery 100 may include an electrode assembly 40 including a separator 30 interposed between a positive electrode 10 and a negative electrode 20, and a case 50 in which the electrode assembly 40 is accommodated. The positive electrode 10, the negative electrode 20, and the separator 30 may be impregnated with an electrolyte (not shown). As shown in FIG. 1, the secondary battery 100 may include a sealing member 60 that seals the case 50. In addition, in FIG. 2, the secondary battery 100 may include a positive electrode lead tab 11, a positive electrode terminal 12, a negative electrode lead tab 21, and a negative electrode terminal 22. As shown in FIGS. 3 and 4, the secondary battery 100 may include electrode tabs 70, that is, a positive electrode tab 71 and a negative electrode tab 72, which form electrical paths for inducing a current formed in the electrode assembly 40 to outside of the secondary battery 100.

### Positive electrode active material

As the positive electrode active material, a compound (lithiated intercalation compound) that is capable of reversible intercalation and deintercalation of lithium may be used. Specifically, one or more of a composite oxide of lithium and a metal selected from cobalt, manganese, nickel, and a combination thereof may be used.

The composite oxide may be a lithium-transition metal composite oxide, and specific examples thereof may include lithium nickel-based oxide, lithium cobalt-based oxide, lithium manganese-based oxide, lithium iron phosphate-based compound, cobalt-free nickel-manganese-based oxide, or a combination thereof.

As examples of composite oxide, compounds represented by any one of the following chemical formulas may be used: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); and LiₐFePO₄(0.90≤a≤1.8). In these chemical formulas, A is Ni, Co, Mn, or a combination thereof; X is Al, Ni, Co, Mn, Cr, Fe, Mg, Sr, V, a rare-earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be a high-nickel-based positive electrode active material having a nickel content, based on 100 mol % of the metal in the lithium-transition metal composite oxide excluding lithium, of greater than or equal to 80 mol %, greater than or equal to 85 mol %, greater than or equal to 90 mol %, greater than or equal to 91 mol %, or greater than or equal to 94 mol % and less than or equal to 99 mol %. The high-nickel-based positive electrode active material may provide high capacity and can be used in high-capacity and high-density rechargeable batteries.

### Positive electrode 10

The positive electrode 10 for the secondary battery 100 may include a current collector (substrate) and a positive electrode active material layer formed on the current collector. The positive electrode active material layer includes a positive electrode active material and may further include a binder and/or a conductive material. The positive electrode may further include an additive that can serve as a sacrificial positive electrode.

An amount of the positive electrode active material may range from 90 wt% to 99 wt% based on 100 wt% of the positive electrode active material layer. An amount of each of the binder and the conductive material may range from 0.5 wt% to 5 wt% based on 100 wt% of the positive electrode active material layer.

The binder serves to adhere positive electrode active material particles to each other and also to adhere the positive electrode active material to the current collector. Examples of the binder include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, nylon, or the like. But the present disclosure is not limited to these examples.

The conductive material is used to provide conductivity to the electrode, and any material that does not cause an undesirable chemical change and is electrically conductive may be used as the conductive material. Examples of the conductive material include a carbon-based material such as natural graphite, artificial graphite, carbon black, acetylene black, Ketjen black, carbon fibers, carbon nanofibers, or carbon nanotubes; a metal-based material in the form of a metal powder or metal fiber including copper, nickel, aluminum, silver, or the like; a conductive polymer such as a polyphenylene derivative; or a mixture thereof.

Aluminum may be used as the current collector, but the present disclosure is not limited thereto.

### Negative electrode active material

The negative electrode active material includes a material that can reversibly intercalate/deintercalate lithium ions, a lithium metal, a lithium metal alloy, a material capable of doping and dedoping lithium, or a transition metal oxide.

The material capable of reversible intercalation and deintercalation of lithium ions is a carbon-based negative electrode active material, and may include, for example, crystalline carbon, amorphous carbon, or a combination thereof. Examples of the crystalline carbon may include graphite such as amorphous, plate shape, flake, spherical shape or fibrous natural graphite or artificial graphite. Examples of the amorphous carbon may include soft carbon or hard carbon, a mesophase pitch carbonized product, calcined coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may include silicon, a silicon-carbon composite, SiOₓ (0<x<2), a Si-Q alloy, or a combination thereof. In the formula Si-Q, Q is selected from an alkali metal, an alkaline-earth metal, a Group 13 element, a Group 14 element (excluding Si), a Group 15 element, a Group 16 element, a transition metal, a rare-earth element, and a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may be in the form of silicon particles and amorphous carbon coated on the surfaces of the silicon particles. For example, the silicon-carbon composite may include secondary particles (core) that are agglomerations of primary particles and an amorphous carbon coating layer (shell) located on the surfaces of the secondary particles. The amorphous carbon may also be located between the silicon primary particles, such that, for example, the silicon primary particles are coated with amorphous carbon. The secondary particles may be dispersed in an amorphous carbon matrix.

The silicon-carbon composite may further include crystalline carbon. The silicon-carbon composite may include, for example, a core including crystalline carbon and silicon particles and an amorphous carbon coating layer located on the surface of the core.

The Si-based negative electrode active material or the Sn-based negative electrode active material may be used by being mixed with a carbon-based negative electrode active material.

### Negative electrode 20

The negative electrode 20 for the secondary battery 100 includes a current collector (substrate) and a negative electrode active material layer located on the current collector. The negative electrode active material layer includes a negative electrode active material and may further include a binder and/or a conductive material. In some examples, the negative electrode active material layer may include 90 wt% to 99 wt% of the negative electrode active material, 0.5 wt% to 5 wt% of the binder, and 0.5 wt% to 5 wt% of the conductive material.

The binder serves to adhere negative electrode active material particles to each other and also to adhere the negative electrode active material to the current collector. A non-aqueous binder, an aqueous binder, a dry binder, or a combination thereof may be used as the binder.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the negative electrode binder, a cellulose-based compound capable of imparting viscosity can be further included. As the cellulose-based compound, one or more of carboxymethyl cellulose, hydroxypropylmethyl cellulose, methyl cellulose, or alkali metal salts thereof may be used in combination. Na, K, or Li can be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The conductive material is used to provide conductivity to the electrode, and any material that does not cause an undesirable chemical change and is electrically conductive may be used in batteries according to the present disclosure. Specific examples of the conductive material may include a carbon-based material such as natural graphite, artificial graphite, carbon black, acetylene black, Ketjen black, carbon fibers, or carbon nanofibers; a metal-based material in the form of a metal powder or metal fiber including copper, nickel, aluminum, silver, or the like; a conductive polymer such as a polyphenylene derivative; or a mixture thereof.

The negative electrode current collector may be selected from a copper foil, a nickel foil, a stainless steel foil, a titanium foil, a nickel foam, a copper foam, a polymer substrate coated with a conductive metal, and a combination thereof.

### Electrolyte

The electrolyte for the secondary battery 100 includes a non-aqueous organic solvent and a lithium salt.

The non-aqueous organic solvent serves as a medium through which ions taking part in the electrochemical reaction of a battery can move. The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone and the like. The alcohol-based solvent may include ethyl alcohol, isopropyl alcohol, and the like, and the aprotic solvent may include nitriles such as R-CN (where R is a C2 to C20 linear, branched, or cyclic hydrocarbon group and includes a double bond, an aromatic ring, or an ether bond), and the like; amides such as dimethyl formamide; dioxolanes such as 1,3-dioxolane and 1,4-dioxolane; sulfolanes; and the like.

The non-aqueous organic solvents may be used alone or in combination of two or more.

In addition, when the carbonate-based solvent is used, a cyclic carbonate and a chain carbonate may be mixed and used, and the cyclic carbonate and the chain carbonate may be mixed in a volume ratio of 1:1 to 1:9.

The lithium salt is dissolved in the organic solvent and serves as a source of lithium ions in a battery, enables a basic operation of a rechargeable battery, and improves the movement of the lithium ions between positive and negative electrodes. Examples of the lithium salt may include one or two or more selected from among LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide LiC₄F₉SO₃, LiN(CₓF₂ₓ₊₁SO₂)(C_{y}F_{2y+1}SO₂) (where, x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

### Separator 30

Depending on the type of the secondary battery 100, the separator 30 may be positioned between the positive electrode 10 and the negative electrode 20. The separator 30 may include polyethylene, polypropylene, polyvinylidene fluoride, or a multilayer film of two or more layers thereof, and of course, may also include a mixed multilayer film such as a polyethylene/polypropylene two-layer separator, a polyethylene/polypropylene/polyethylene three-layer separator, a polypropylene/polyethylene/polypropylene three-layer separator, or the like.

The separator 30 may include a porous substrate and a coating layer including an organic material, an inorganic material, or a combination thereof located on one surface or both surfaces of the porous substrate.

The porous substrate may be a polymer film formed of a polymer, or a copolymer or a mixture of two or more selected from polyolefins such as polyethylene, polypropylene, and the like, polyesters such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, glass fibers, Teflon, and polytetrafluoroethylene.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples.

The organic and inorganic materials may be present by being mixed in one coating layer. In other embodiments, the organic and inorganic materials may be present in a form in which a coating layer including organic materials and a coating layer including inorganic materials are stacked.

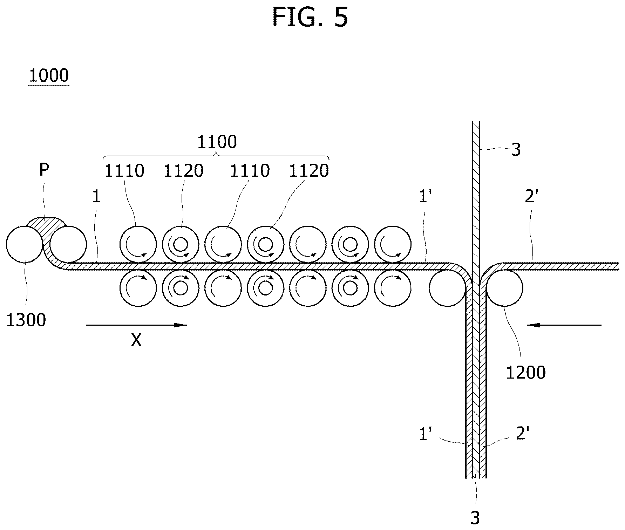

FIG. 5 is a schematic diagram of a dry electrode manufacturing device according to an embodiment of the present disclosure. Referring to FIG. 5, a dry electrode manufacturing device 1000 includes a calendaring unit 1100 that includes machine-direction stretching rolls 1110 and transverse-direction stretching rolls 1120. The dry electrode manufacturing device 1000 may also include a laminator roll 1200 and a supply roll 1300. Although not illustrated in FIG. 5, the dry electrode manufacturing device 1000 may further include a trimming unit.

The dry electrode manufacturing device 1000 may form a dry electrode film 1 (first dry electrode film) from powder P for a dry electrode film. The device 1000 may stretch the dry electrode film 1 formed into a film in a machine direction (MD) and also in a transverse direction (TD) until a desired thickness is achieved. The dry electrode manufacturing device 1000 may make a dry electrode by bonding the stretched dry electrode film 1 to at least one surface of a metal substrate 3, which is a current collector.

The supply roll 1300 may form the powder P for a dry electrode film into a film and provide the film to the calendaring unit 1100. The powder P for a dry electrode film may be a kneaded electrode active material that is prepared by mixing, kneading, and then pulverizing an electrode active material. The supply roll 1300 may include a pair of rolls that are spaced apart by a predetermined distance. The rolls may roll the powder P for a dry electrode film under a predetermined pressure to thereby form of a film.

The calendaring unit 1100 may roll the dry electrode film 1 (first dry electrode film), which is formed into a film, while transporting the dry electrode film 1 in a traveling direction X, which is the machine direction, until a desired thickness is achieved. The calendaring unit 1100 may stretch the dry electrode film, which is formed into a film, in the machine direction (MD) and in the transverse direction (TD) that is perpendicular to the machine direction (MD). According to the present embodiment, by stretching the dry electrode film 11 in both the machine direction and the transverse direction, a stretched dry electrode film 1' may exhibit increased tensile strength in the machine and transverse directions.

To this end, the calendaring unit 1100 may include the machine-direction stretching rolls 1110 and the transverse-direction stretching rolls 1120.

The machine-direction stretching rolls 1110 may support the first dry electrode film 1 and move the first dry electrode film 1 in a first/machine direction (indicated by arrow X), which is a direction in which the first dry electrode film 1 is transported. The machine-direction stretching rolls 1110 may stretch the first dry electrode film 1 in the first direction by moving the first dry electrode film 1 in the first direction while pressing the first dry electrode film 1 under a predetermined pressure.

The machine-direction stretching roll 1110 may include a pair of rolls spaced apart from each other by a predetermined distance and facing each other. The first dry electrode film 1 may pass through a gap between the pair of rolls. In some examples, the distance between the pair of rolls may be slightly less than a thickness of the incoming first dry electrode film 1. The pair of rolls may rotate in engagement with each other with the first dry electrode film 1 interposed therebetween, thereby pressing, moving, and simultaneously stretching the first dry electrode film in the first direction.

The machine-direction stretching roll 1110 may have a smooth surface with no pattern, grooves, or protrusions formed therein. Even with the smooth surface, the machine-direction stretching roll 1110 may stretch the first dry electrode film 1 in the first direction by pressing the first dry electrode film 1 in a thickness direction with the pair of rotating rolls. As such, the first dry electrode film 1 may have increased tensile strength in the first direction.

The transverse-direction stretching rolls 1120 may support the first dry electrode film 1 and move the first dry electrode film 1 in the first/machine direction (indicated by arrow X), which is a direction in which the first dry electrode film 1 is transported. In addition, the transverse-direction stretching roll 1120 may stretch the first dry electrode film 1 in a second direction, which intersects the first direction (indicated by arrow X). In some examples, the second/transverse direction is perpendicular to the first/machine direction. The transverse-direction stretching roll 1120 may stretch the first dry electrode film 1 in the second direction by pressing and moving the first dry electrode film 1 in the first direction.

To this end, the transverse-direction stretching roll 1120 may include a pair of rolls that are spaced apart by a predetermined distance, disposed to face each other, and have predetermined patterned portions formed in surfaces of the rolls. The first dry electrode film 1 may pass through a gap between the pair of rolls. In some examples, the distance between the pair of rolls may be slightly less than the thickness of the incoming first dry electrode film 1. Each of the rolls may have a predetermined patterned portion formed on its surface, and the rolls may rotate while engaging with each other with the first dry electrode film 1 interposed therebetween to thereby move the first dry electrode film 1 in the first direction and simultaneously stretch the first dry electrode film 1 in the second direction. The shape of the patterned portion formed on the surface of the transverse-direction stretching roll 1120 is described below.

The calendaring unit 1100 may include a plurality of machine-direction stretching rolls 1110 and one or more transverse-direction stretching rolls 1120. The machine-direction stretching rolls 1110 and the transverse-direction stretching rolls 1120 may be alternated in the first direction. Accordingly, the first dry electrode film 1 may move in the first direction while passing through the machine-direction and transverse-direction stretching rolls and thereby stretched in the first direction and in the second direction.

The machine-direction stretching rolls 1110 and the transverse-direction stretching rolls 1120 may be mixed in various ways in the first direction. For example, as illustrated in FIG. 5, the machine-direction stretching rolls 1110 and the transverse-direction stretching rolls 1120 may be alternately disposed in the first direction. That is, the transverse-direction stretching rolls 1120 and the machine-direction stretching rolls 1110 may be disposed one by one. In other embodiments, the machine-direction stretching rolls 1110 and the transverse-direction stretching rolls 1120 may be alternately disposed in the first direction in groups of two or more.

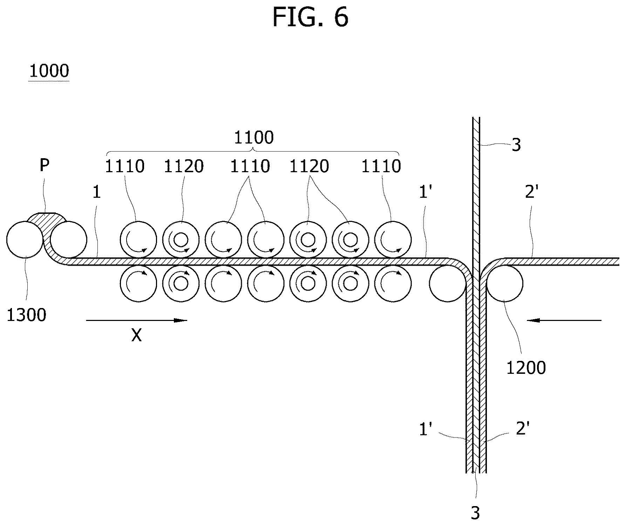

FIG. 6 illustrates another example where the machine-direction stretching rolls 1110 and the transverse-direction stretching rolls 1120 are alternated in the machine direction (MD). Referring to FIG. 6, the transverse-direction stretching rolls 1120 may be positioned between adjacent machine-direction stretching rolls 1110. More specifically, the transverse-direction stretching rolls 1120 may be disposed between the first and second machine-direction stretching rolls 1110 and not be disposed between the second and third machine-direction stretching rolls 1110 or between the third and fourth machine-direction stretching rolls 1110. The transverse-direction stretching rolls 1120 may be positioned between the fourth and fifth machine-direction stretching rolls 1110.

The number of transverse-direction stretching rolls 1120 disposed between adjacent machine-direction stretching rolls 1110 is not limited. Further, the number of transverse-direction stretching rolls 1120 disposed between machine-direction stretching rolls 1110 does not need to be constant. For example, as illustrated in FIG. 6, one pair of transverse-direction stretching rolls 1120 is disposed between the first and second machine-direction stretching rolls 1110, whereas two pairs of transverse-direction stretching rolls 1120 are positioned between the third and fourth machine-direction stretching rolls 1110.

In either the arrangement form illustrated in FIG. 5 or the arrangement form illustrated in FIG. 6, the machine-direction stretching roll 1110 may be disposed at the most downstream side in the first direction. Accordingly, the first dry electrode film 1 may be more smoothly transported in the first direction.

The laminator roll 1200 may be located at the downstream end of the calendaring unit 1100 in the first/machine direction. Thus, the stretched first dry electrode film 1', having passed through the calendaring unit 1100, may be transported to the laminator roll 1200.

Although not illustrated in the drawings, the trimming unit may be provided in the calendaring unit 1100 and/or between the calendaring unit 1100 and the laminator roll 1200. The trimming unit may remove edge portions on opposite sides of the stretched first dry electrode film 1' formed by the calendaring unit 1100 such that the edges of the stretched first dry electrode film 1' may become smooth.

A second dry electrode film 2' may be manufactured through the same process as the first dry electrode film 1' which are described above, and a detailed descriptions for fabricating the second electrode film 2' will be omitted.

In the laminator roll 1200, the dry electrode films 1' and 2' may be bonded to the metal substrate 3. That is, the dry electrode films 1' and 2 may be bonded to opposite surfaces of the metal substrate 3. As such, the metal substrate 3 as well as the dry electrode films 1' and 2 are supplied to the laminator roll 1200.

In the embodiment depicted in FIG. 5, the dry electrode films 1' and 2 are illustrated as being bonded to opposite surfaces of the metal substrate 3, but this is merely an example. In other embodiments, the dry electrode film 1' is bonded to only one surface of the metal substrate 3.

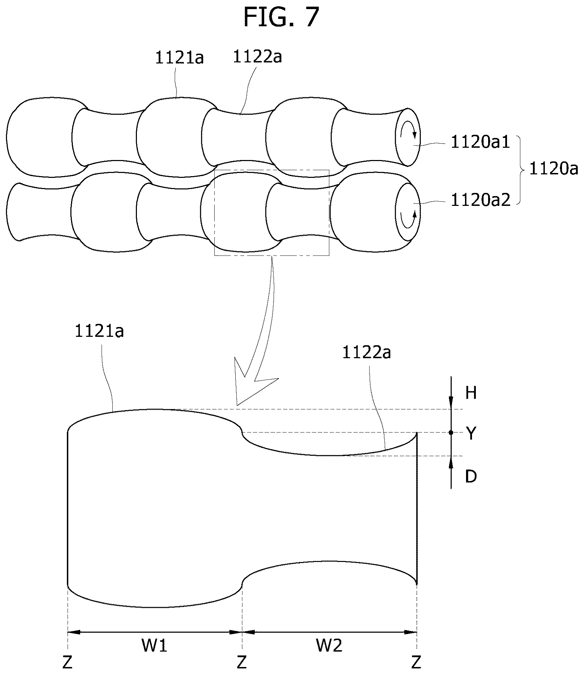

FIG. 7 is a schematic view of a first embodiment of the transverse-direction stretching roll in the dry electrode manufacturing device illustrated in FIG. 5.

Referring to FIGS. 5 and 7, a transverse-direction stretching roll 1120a may include a first transverse-direction stretching roll 1120a1 and a second transverse-direction stretching roll 1120a2, which are spaced apart from each other by a predetermined distance in a direction intersecting both the first direction and the second direction, that is, in a thickness direction of the first dry electrode film 1. As described above, the first transverse-direction stretching roll 1120a1 and the second transverse-direction stretching roll 1120a2 may rotate in engagement with each other to roll and transport the first dry electrode film 1 in the first/machine direction.

The transverse-direction stretching rolls 1120a, that is, the first transverse-direction stretching roll 1120a1 and the second transverse-direction stretching roll 1120a2, may include protrusions 1121a and grooves 1122a alternately disposed in the second direction. In FIG. 7, three protrusions 1121a and three grooves 1122a are alternately disposed. But this configuration is merely an exemplary illustration. The number of protrusions 1121a and grooves 1122a vary depending on factors such as a total length of the transverse-direction stretching roll 1120a in the second direction and a width of each of the protrusion 1121a and the groove 1122a.

Shapes of the protrusion 1121a and the groove 1122a may correspond to each other. More specifically, a contour of the protrusion 1121a and a contour of the groove 1122a may correspond to each other. Here, the phrase "the contours correspond to each other" may refer to a case, as illustrated in FIG. 7, in which the protrusion 1121a of the first transverse-direction stretching roll 1120a1 and the groove 1122a of the second transverse-direction stretching roll 1120a2, or the groove 1122a of the first transverse-direction stretching roll 1120a1 and the protrusion 1121a of the second transverse-direction stretching roll 1120a2, face each other such that a distance between the protrusion 1121a and the groove 1122a is uniform.

When the contour of the protrusion 1121a and the contour of the groove 1122a correspond to each other, a height H of the protrusion 1121a may be substantially equal to a depth D of the groove 1122a. Here, the height H of the protrusion 1121a refers to the maximum height of the protrusion 1121a with respect to a reference level Y as shown in FIG. 7. The reference level Y serves as a boundary between the protrusion 1121a and the groove 1122a, and may correspond, for example, to a vertical coordinate of an inflection point in the contour of the transverse-direction stretching roll 1120 having the protrusions 1121a and the grooves 1122a. The depth D of the groove 1122a refers to the maximum depth of the groove 1122a with respect to the reference level Y.

When the contour of the protrusion 1121a and the contour of the groove 1122a correspond to each other, a width W1 of the protrusion 1121a may be substantially equal to a width W2 of the groove 1122a. Here, the width W1 of the protrusion 1121a refers to the maximum width of the protrusion 1121a with respect to a reference position Z. The reference position Z serves as a horizontal boundary between the protrusion 1121a and the groove 1122a, and may correspond, for example, to a horizontal coordinate of the inflection point in the contour of the transverse-direction stretching roll 1120 including the protrusions 1121a and the grooves 1122a. In addition, the width W2 of the groove 1122a refers to the maximum width of the groove 1122a with respect to the reference position Z.

In some embodiments, the height H of the protrusion 1121a and the depth D of the groove 1122a may each range from 1 µm to 20 mm. When the height H of the protrusion 1121a or the depth D of the groove 1122a is less than 1 µm, stretching in the second direction may be insignificant, and substantial increasement in tensile strength may not be achieved. On the other hand, when the height H of the protrusion 1121a or the depth D of the groove 1122a is greater than 20 mm, excessive stretching in the second direction may occur, which may damage or tear the first dry electrode film 1 in the first direction.

In some embodiments, the width W1 of the protrusion 1121a and the width W2 of the groove 1122a may each range from 1 mm to 200 mm. When the width W1 of the protrusion 1121a or the width W2 of the groove 1122a is greater than 20 mm, stretching in the second direction may be insignificant, and substantial increasement in tensile strength may not be achieved. On the other hand, when the width W1 of the protrusion 1121a or the width W2 of the groove 1122a is less than 1 mm, an excessive amount of stretching in the second direction may occur, which may damage or tear the first dry electrode film 1 in the first direction.

A pair of transverse-direction stretching rolls 1120a, that is, the first transverse-direction stretching roll 1120a1 and the second transverse-direction stretching roll 1120a2, that are spaced apart by a predetermined distance in the thickness direction of the first dry electrode film 1, may be alternately disposed. More specifically, the first transverse-direction stretching roll 1120a1 and the second transverse-direction stretching roll 1120a2 may be positioned such that the protrusion 1121a of the first transverse-direction stretching roll 1120a1 faces the groove 1122a of the second transverse-direction stretching roll 1120a2, and the groove 1122a of the first transverse-direction stretching roll 1120a1 faces the protrusion 1121a of the second transverse-direction stretching roll 1120a2. As described above, when the protrusions 1121a and the grooves 1122a face each other, the first transverse-direction stretching roll 1120a1 and the second transverse-direction stretching roll 1120a2 may rotate in engagement with each other to thereby transport the first dry electrode film 1 disposed therebetween in the first direction while stretching the first dry electrode film 1 in the second direction. As the first dry electrode film 1 is stretched in the second direction, tensile strength of the first dry electrode film 1 in the second direction may be increased.

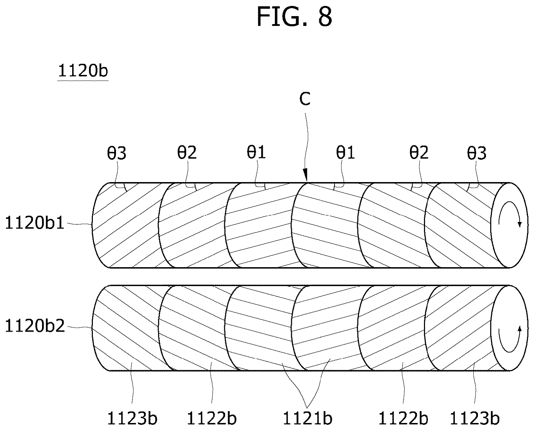

FIG. 8 illustrates a second embodiment of the transverse-direction stretching roll in the dry electrode manufacturing device illustrated in FIG. 5.

Referring to FIGS. 5 and 8, a transverse-direction stretching roll 1120b may include a pair of transverse-direction stretching rolls, i.e., a first transverse-direction stretching roll 1120b1 and a second transverse-direction stretching roll 1120b2, which are disposed to be spaced apart from each other by a predetermined distance in a direction intersecting the first direction and the second direction, that is, in the thickness direction of the first dry electrode film 1. As described above, the first transverse-direction stretching roll 1120b1 and the second transverse-direction stretching roll 1120b2 may rotate in engagement with each other to roll and transport the first dry electrode film 1 in the first/machine direction.

In the embodiment depicted in FIG. 8, the transverse-direction stretching rolls 1120b, that is, the first transverse-direction stretching roll 1120b1 and the second transverse-direction stretching roll 1120b2, may include patterned portions 1121b, 1122b, and 1123b that are oblique patterns formed at predetermined angles θ1, θ2, and θ3, respectively, with respect to the second direction corresponding to a longitudinal direction in which the transverse-direction stretching roll 1120b extends. The oblique patterns of the patterned portions 1121b, 1122b, and 1123b are configured to stretch the first dry electrode film 1, which contacts the oblique patterns, in the transverse direction. Accordingly, the angles θ1, θ2, and θ3 of the oblique patterns may each be less than 45°. As a result, when the first dry electrode film 1 is rolled by the transverse-direction stretching rolls 1120b having the patterned portions 1121b, 1122b, and 1123b, the first dry electrode film 1 may be stretched more in the second direction than in the first direction.

The oblique patterns of the patterned portions 1121b, 1122b, and 1123b may be implemented in various ways. For example, the patterned portions 1121b, 1122b, and 1123b may be raised or recessed patterns corresponding to the oblique patterns on a stretching roll otherwise having a smooth surface. In other embodiments, the patterned portions 1121b, 1122b, and 1123b may be implemented by locally increasing the frictional force only in portions corresponding to the oblique patterns on a stretching roll having a smooth surface. For example, a surface roughness of the portion corresponding to the oblique pattern may be greater than a non-patterned portion without the oblique pattern, thereby increasing the frictional force.

The angles θ1, θ2, and θ3 of the patterned portions 1121b, 1122b, and 1123b may be different from each other. More specifically, the patterned portions 1121b, 1122b, and 1123b may include a first patterned portion 1121b having a first angle θ1 with respect to the second direction, a second patterned portion 1122b having a second angle θ2 with respect to the second direction, and a third patterned portion 1123b having a third angle θ3 with respect to the second direction. Here, the first angle θ1, the second angle θ2, and the third angle θ3 may be different from each other. The number of patterned portions is in the present disclosure and may be two or four or more.

According to an embodiment, a plurality of patterned portions 1121b, 1122b, and 1123b may be symmetrical with respect to a center C in a longitudinal direction (second direction) of the transverse-direction stretching roll 1120b. More specifically, pairs of first patterned portions 1121b may be disposed on opposite sides nearest to the center C to be symmetrical with respect to the center C. Pairs of second patterned portions 1122b may be disposed on outer sides of the pair of first patterned portions 1121b to be symmetrical with respect to the center C. As such, each pair of second patterned portions 1122b may be disposed farther from the center C than each of the pair of first patterned portions 1121b. Pairs of third patterned portions 1123b may be disposed on outer sides of the pair of second patterned portions 1122b to be symmetrical with respect to the center C. As such, each pair of third patterned portions 1123b may be disposed farther from the center C than each pair of second patterned portions 1122b.

As that patterned portions 1121b, 1122b, and 1123b may be symmetrically disposed with respect to the center C of the transverse-direction stretching roll 1120b, the degree of stretching of the first dry electrode film 1 in the second direction may be symmetrical with respect to the center in a width direction. Thus, the first dry electrode film 1 may be provided with uniform properties.

According to an embodiment, an oblique angle of the patterned portion disposed closer to the center C may be less than an oblique angle of the patterned portion disposed farther from the center C. More specifically, the first angle θ1 of the oblique pattern of the first patterned portion 1121b may be the smallest of the angles θ1, θ2, and 03, the second angle θ2 of the oblique pattern of the second patterned portion 1122b may be larger than the first angle θ1, and the third angle θ3 of the oblique pattern of the third patterned portion 1123b may be the largest of the angles θ1, θ2, and θ3. With such a configuration, the first dry electrode film 1 may be stretched more by the patterned portion disposed closer to the center C and less by the patterned portion disposed farther from the center C. That is, the first dry electrode film 1 may be stretched relatively more near the center in the width direction and relatively less near the edges farther from the center. As a result, the tensile strength near the center of the first dry electrode film 1 may be relatively more increased by the transverse-direction stretching using the transverse-direction stretching roll 1120b. As such, tearing of the first dry electrode film 1 in the first/machine direction near the center in the width direction during handling in a subsequent processing may be more effectively prevented.

The first transverse-direction stretching rolls 1120b1 and the second transverse-direction stretching rolls 1120b2, which are disposed to be spaced apart from each other by a predetermined distance in the thickness direction of the first dry electrode film 1, may be symmetrical with respect to the first dry electrode film 1. More specifically, the first patterned portion 1121b of the first transverse-direction stretching roll 1120b1 may face the first patterned portion 1121b of the second transverse-direction stretching roll 1120b2, the second patterned portion 1122b of the first transverse-direction stretching roll 1120b1 may face the second patterned portion 1122b of the second transverse-direction stretching roll 1120b2, and the third patterned portion 1123b of the first transverse-direction stretching roll 1120b1 may face the third patterned portion 1123b of the second transverse-direction stretching roll 1120b2. By disposing the patterned portions having the same oblique angle to face each other in this manner, the first dry electrode film 1 may be uniformly stretched in the transverse direction at a lower portion and an upper portion in the thickness direction.

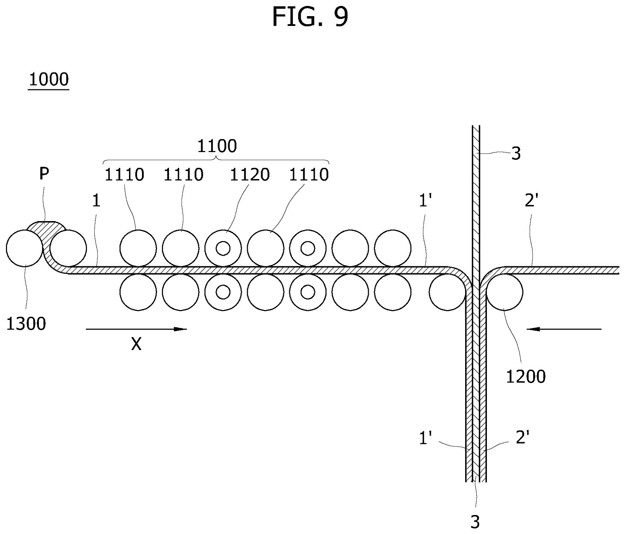

FIG. 9 is a schematic diagram of a dry electrode manufacturing device according to another embodiment of the present disclosure. The dry electrode manufacturing device 1000 illustrated in FIG. 9 is different from the dry electrode manufacturing device 1000 illustrated in FIG. 5 with respect to the arrangement of the machine-direction stretching rolls 1110 and the transverse-direction stretching rolls 1120. The following description will be primarily directed at differences from the dry electrode manufacturing device 1000 illustrated in FIG. 5.

Referring to FIG. 9, the dry electrode manufacturing device 1000 includes a calendaring unit 1100, a laminator roll 1200, and a supply roll 1300. The calendaring unit 1100 includes machine-direction stretching rolls 1110 and transverse-direction stretching rolls 1120. With respect to the first direction, which is a transport direction of the first dry electrode film 1, the transverse-direction stretching roll 1120 is intermittently positioned between the machine-direction stretching rolls 1110. That is, the transverse-direction stretching roll 1120 may be selectively positioned between the machine-direction stretching rolls 1110.

In the embodiment depicted in FIG. 9, two machine-direction stretching rolls 1110 are disposed at the most upstream end in the first direction, which is a transport direction of the first dry electrode film 1. The transverse-direction stretching roll 1120 and the machine-direction stretching roll 1110 are alternately disposed in a repeated manner, with the machine-direction stretching roll 1110 disposed at the most downstream end in the first direction.

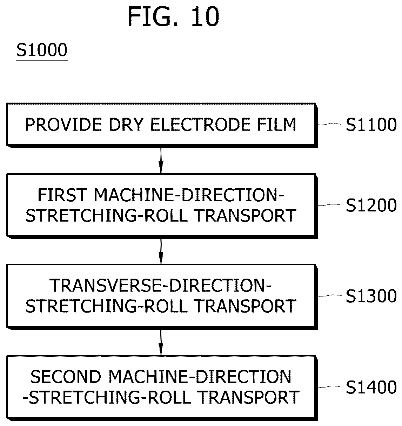

FIG. 10 is a flowchart of a dry electrode manufacturing method according to an embodiment of the present disclosure. The dry electrode manufacturing method illustrated in FIG. 10 may be a method of manufacturing a dry electrode using the dry electrode manufacturing device as described above.

A dry electrode manufacturing method S1000 includes a dry electrode film providing operation S1100, a first machine-direction-stretching-roll transport operation S1200, a transverse-direction-stretching-roll transport operation S1300, and a second machine-direction-stretching-roll transport operation S1400.

In the dry electrode film providing operation S1100, a dry electrode film is moved toward the calendaring unit and the laminator roll. In the first machine-direction-stretching-roll transport operation S1200 the dry electrode film is moved through the machine-direction stretching roll. In the transverse-direction-stretching-roll transport operation S1300, the dry electrode film, which has been moved in the first machine-direction-stretching-roll transport operation S1200, is moved through the transverse-direction stretching roll. In the second machine-direction-stretching-roll transport operation S1400, the dry electrode film, which has been moved in the transverse-direction-stretching-roll transport operation S1300, is moved through the machine-direction stretching roll toward the laminator roll.

The dry electrode manufacturing method S1000 may further include an additional machine-direction-stretching-roll transport operation and/or an additional transverse-direction-stretching-roll transport operation. In the additional machine-direction-stretching-roll transport operation and the additional transverse-direction-stretching-roll transport operation the dry electrode film, which has been moved in the transverse-direction-stretching-roll transport operation S1300, is further moved through the transverse-direction stretching roll and the machine-direction stretching roll.

The dry electrode manufacturing method S1000 according to some embodiments of the present disclosure may further include a laminator-roll transport operation of moving the dry electrode film, which has been moved in the second machine-direction-stretching-roll transport operation S 1400, through the laminator roll.
A dry electrode made by the dry electrode manufacturing device and the dry electrode manufacturing method according to the present disclosure may be evaluated for peel strength through adhesion testing. Then, tensile strength in the transverse direction and the machine direction may be determined based on the peel strength. That is, when the peel strength in the transverse direction increases, it may be confirmed that a stretching ratio in the transverse direction has increased, and accordingly, it may be verified that the tensile strength has increased.

To this end, the peel strength of the dry electrode may be evaluated by an adhesion test using a surface and interfacial characterization analysis system (SAICAS).

In such an evaluation, a blade penetrates 10 µm in a depth direction and peels an electrode plate in a horizontal direction, and a difference in peel strength may occur depending on the directionality in the machine direction or the transverse direction.

In general, because fiber alignment in a dry electrode predominantly occurs in the machine direction, the peel strength measured in the transverse direction using the SAICAS blade is higher than that measured in the machine direction. This is because the peel strength measured in the machine direction is evaluated along the fiber alignment, i.e., along the grain, whereas the peel strength measured in the transverse direction involves breaking the fibers aligned in the machine direction.

A ratio of peel strength in the machine and transverse directions is generally set such that machine-direction peel strength is less than transverse-direction peel strength, or transverse-direction peel strength x 50% < machine-direction peel strength < transverse-direction peel strength. Alternatively, the machine-direction peel strength may fall within a range of transverse-direction peel strength x 70% < machine-direction peel strength < transverse-direction peel strength.

However, in the dry electrode manufacturing device according to the present disclosure, the use of the transverse-direction stretching rolls increases the machine-direction peel strength. Specifically, the machine-direction peel strength falls within a range of transverse-direction peel strength x 75% < machine-direction peel strength < transverse-direction peel strength, thereby confirming that the tensile strength in the transverse direction is increased.

To evaluate the binder distribution and adhesive strength in upper and lower portions of an electrode plate, which are key factors in quality control, the adhesive strength distribution in the depth direction of the electrode plate is evaluated using a SAICAS system.

In such an evaluation, the blade is diagonally driven along the depth direction to cut into the electrode plate, and the adhesive strength inside the electrode plate is evaluated at each position. At this time, the force measured while the blade horizontally cuts the dry electrode film corresponding to a mixture layer indicates the internal adhesive strength of the electrode plate. As this is also associated with the binder distribution at each depth position, it can be an evaluation method for identifying the binder distribution by depth within the electrode plate. That is, a higher adhesive strength corresponds to a greater binder distribution, while a lower adhesive strength corresponds to a smaller binder distribution, thereby allowing estimation of the degree of binder distribution in the upper and lower portions.

In the dry electrode manufacturing device according to the present disclosure, the use of transverse-direction stretching rolls increases the mechanical strength by improvements in binder distribution and adhesive strength at respective depth positions within the electrode plate.

According to the present disclosure, tensile strength of a dry electrode film can be increased a machine direction and also in a transverse direction, thereby improving the mechanical strength and reliability of the dry electrode film. Accordingly, the performance of an electrode including the dry electrode film and a battery including the electrode can be improved.

Further, by adjusting the number and arrangement of machine direction and transverse-direction stretching rolls and/or the shape and distribution of patterns formed on the transverse-direction stretching roll, the amount of increase in tensile strength in a transverse direction of a dry electrode film can be controlled.

However, it will be appreciated by persons skilled in the art that the effects that can be achieved through the present disclosure are not limited to what has been described hereinabove and other advantages of the present disclosure will be understood from the foregoing description.

While the above disclosure has been described with reference to the exemplary embodiments illustrated in the accompanying drawings, the present disclosure is not limited to the disclosed embodiments.

## Claims

1. A dry electrode manufacturing device comprising:
machine-direction stretching rolls (1110) configured to stretch a dry electrode film in a first direction while transporting the dry electrode film in the first direction; and
transverse-direction stretching rolls (1120, 1120a, 1120b) configured to stretch the dry electrode film in a second direction perpendicular to the first direction while transporting the dry electrode film in the first direction,
wherein the machine-direction stretching rolls (1110) and the transverse-direction stretching rolls (1120, 1120a, 1120b) are alternatively positioned in the first direction.

2. The dry electrode manufacturing device of claim 1, wherein each of the transverse-direction stretching rolls (1120, 1120a, 1120b) includes grooves (1122a) and protrusions (1121a) alternately positioned in the second direction.

3. The dry electrode manufacturing device of claim 2, wherein a contour of each of the protrusions (1121a) and a contour of each of the grooves (1122a) correspond to each other.

4. The dry electrode manufacturing device of claim 3, wherein a height of the protrusion (1121a) is equal to a depth of the groove (1122a), and
wherein a width of the protrusion (1121a) is equal to a width of the groove (1122a);
wherein preferably the heights of the protrusion (1121a) and the depths of the groove (1122a) are 1 µm to 20 mm, and
wherein the widths of the protrusion (1121a) and the widths of the groove (1122a) are 1 mm to 200 mm.

5. The dry electrode manufacturing device of claim 3 or 4, wherein the transverse-direction stretching rolls (1120, 1120a, 1120b) include a first transverse-direction stretching roll (1120, 1120a, 1120b) and a second transverse-direction stretching roll (1120, 1120a, 1120b) that are disposed on opposite sides of the dry electrode film in a thickness direction, and
wherein the first transverse-direction stretching roll (1120, 1120a, 1120b) and the second transverse-direction stretching roll (1120, 1120a, 1120b) are positioned such that the protrusions (1121a) of one of the first transverse-direction stretching roll (1120, 1120a, 1120b) and the second transverse-direction stretching roll (1120, 1120a, 1120b) face the grooves (1122a) of the other of the first transverse-direction stretching roll (1120, 1120a, 1120b) and the second transverse-direction stretching roll (1120, 1120a, 1120b).

6. The dry electrode manufacturing device of any one of the preceding claims, wherein each of the transverse-direction stretching rolls (1120, 1120a, 1120b) includes a patterned portion in which an oblique pattern is formed at a predetermined angle with respect to a straight line extending in the second direction;
wherein preferably the predetermined angle is less than 45°.

7. The dry electrode manufacturing device of claim 6, wherein the patterned portion includes a pair of first patterned portions (1121b) having a first oblique pattern formed at a first angle with respect to the straight line, and a pair of second patterned portions (1122b) having a second oblique pattern formed at a second angle with respect to the straight line, and
wherein the first patterned portions (1121b) are positioned symmetrical in the second direction with respect to a center portion of the transverse-direction stretching roll (1120, 1120a, 1120b), and the second patterned portions (1122b) are positioned symmetrical in the second direction with respect to the center portion of the transverse-direction stretching roll (1120, 1120a, 1120b).

8. The dry electrode manufacturing device of claim 7, wherein the second patterned portions (1122b) are positioned farther from the center portion than the first patterned portions (1121b) are positioned from the center portion, and
wherein the second angle is greater than the first angle.

9. The dry electrode manufacturing device of claim 8, wherein the patterned portion further includes a third patterned portion (1123b) having an oblique pattern formed at a third angle that is greater than the second angle, and
wherein the third patterned portion (1123b) is positioned farther from the center portion than the second patterned portion (1122b) is positioned from the center portion.

10. The dry electrode manufacturing device of any one of the claims 7 to 9, wherein the transverse-direction stretching rolls (1120, 1120a, 1120b) include a first transverse-direction stretching roll (1120, 1120a, 1120b) and a second transverse-direction stretching roll (1120, 1120a, 1120b) disposed on opposite sides of the dry electrode film in a thickness direction, and
wherein the first transverse-direction stretching roll (1120, 1120a, 1120b) and the second transverse-direction stretching roll (1120, 1120a, 1120b) are positioned such that the first patterned portion (1121b) of the first transverse-direction stretching roll (1120, 1120a, 1120b) faces the first patterned portion (1121b) of the second transverse-direction stretching roll (1120, 1120a, 1120b) and such that the second patterned portion (1122b) of the first transverse-direction stretching roll (1120, 1120a, 1120b) faces the second patterned portion (1122b) of the second transverse-direction stretching roll (1120, 1120a, 1120b).

11. The dry electrode manufacturing device of any one of the claims 6 to 10, wherein the patterned portions (1121b, 1122b, 1123b) have more friction than non-patterned portions where the oblique patterns are not formed in surfaces of the transverse-direction stretching rolls (1120, 1120a, 1120b).

12. The dry electrode manufacturing device of claim 11, wherein the patterned portions (1121b, 1122b, 1123b) have greater surface roughness than the non-patterned portions.

13. The dry electrode manufacturing device of claim 11 or 12, wherein the patterned portions (1121b, 1122b, 1123b) include raised patterns that protrude further than the non-patterned portions.

14. A dry electrode manufacturing method of manufacturing the dry electrode using the dry electrode manufacturing device of any one of claims 1 to 13.

15. A dry electrode manufactured using the dry electrode manufacturing device of any one of claims 1 to 13.
